# EUROPÄISCHE PATENTSCHRIFT

(11) **EP 0 438 812 B1**
(45) Veröffentlichungstag und Bekanntmachung des Hinweises auf die Patenterteilung: **30.03.1994**
(21) Anmeldenummer: 90125840.0
(22) Anmeldetag: 31.12.1990
(51) Int. Cl.: B01D 53/14, B01D 53/34, C10L 3/10, C07C 7/11

(54) **Vefahren zum Abfangen von Schwefelwasserstoff mit Glyoxal**
Method for absorbing hydrogen sulfide with glyoxal
Méthode pour absorber de l'hydrogène sulfuré avec du glyoxal

(30) Priorität: 25.01.1990 DE 4002132
(43) Veröffentlichungstag der Anmeldung: 31.07.1991
(73) Patentinhaber: SOCIETE FRANCAISE HOECHST, 93240 Stains (FR)
(72) Erfinder: Porz, Christoph, Dr., W-5300 Bonn (DE); Christensen, Bernd, Dr., W-6237 Liederbach (DE); Kyaw-Naing, Elena, W-6231 Schwalbach (DE); Gulden, Walter, Dr., W-6238 Hofheim am Taunus (DE); Paulus, Erich Friedrich, Dr., W-6239 Eppstein-/Taunus (DE)
(74) Vertreter: Rinuy, Santarelli

(56) Entgegenhaltungen:
- US-A- 4 083 945
- US-A- 4 680 127

## Beschreibung

Die Erfindung bezieht sich auf ein Verfahren zum Abfangen von Schwefelwasserstoff aus Gasen mit Glyoxal. Die Anwesenheit von Schwefelwasserstoff im Roherdgas, im Roherdölgas oder in Synthesegas ist aus verschiedenen Gründen unerwünscht. Schwefelwasserstoff ist hochtoxisch, so daß eine weit verbreitete Forderung an die Reinheit von Erdgas für Verbrauchernetze ein Gehalt von maximal 6 mg/m³ Schwefelwasserstoff ist. Bei der Verbrennung produzieren schwefelwasserstoffreiche Öle oder Erdgase außerdem hohe Umweltbelastungen durch entstehendes Schwefeldioxid. In Crackanlagen wirkt der Schwefelwasserstoff als Kontaktgift für die Katalysatoren. Zuletzt führt er zu wasserstoffinduzierter Sprödigkeit bei Kohlenstoffstählen und zur Spannungsrißkorrosion bei höherlegierten Werkstoffen. Aus den genannten Gründen versucht man, den Schwefelwasserstoff aus dem Erdgas bzw. Erdöl so weit wie möglich auszuwaschen oder chemisch umzuwandeln.

Es existieren deswegen für die Reinigung von Rohgasen verschiedene physikalische und chemische Verfahrensprozesse, die, je nach Gehalt des Rohgases an Schwefelwasserstoff und Begleitstoffen und den Anforderungen an die Reinheit des Endproduktes, in unterschiedlichem Maße wirtschaftlich sind. Der Schwefelwasserstoffgehalt im Erdöl liegt im ppm-Bereich, wohingegen im Erdgas 20 % Schwefelwasserstoff und mehr enthalten sein können. Die Gewinnung von Elementschwefel aus schwefelwasserstoffreichen Erdgasquellen durch katalytische Oxidation, durch partielle Oxidation zu SO₂ und anschließende Disproportionierung (Claus-Prozeß) oder durch Oxidation mit Nitrit (Sulfo-Check-Verfahren) spielt besonders in Europa eine bedeutende Rolle.

Ist eine Reduktion von Schwefelwasserstoff zu Schwefel nicht wirtschaftlich, z.B. weil der Schwefelwasserstoffanteil im Erdgas zu gering ist oder Transportmöglichkeiten für den gewonnenen Schwefel fehlen, bedient man sich sogenannter chemischer Scavenger-Systeme. Zum Einsatz kommen drei Gruppen von Chemikalien [Review "H₂S-Scavenging" in Oil and Gas Journal, Jan. 1989, 51-55 (Part 1); 81-82 (Part 2); Feb. 1989, 45-48 (Part 3); 90-91 (Part 4)]: Aldehyde, Metalloxide und Amine (US-A-4 808 765).

Die Verwendung von Aldehyden zum Abfangen von Schwefelwasserstoff ist seit längerem bekannt. So wird in der US-Patentschrift 1 991 765 die Reaktion von Schwefelwasserstoff und einem Aldehyd zwischen pH-Werten von 2 - 12 bei Temperaturen von 20 - 100°C beschrieben. Insbesondere bei pH-Werten von 2 oder kleiner wird die Reaktion von Formaldehyd, Glyoxal, Acrolein und anderen Aldehyden wiederholt beschrieben (z.B. US-Patentschriften 2 606 873, 3 514 410, 3 585 069, 3 669 613, 4 289 639, 4 310 435).

In der Praxis wurden bisher in erster Linie Formaldehydlösungen eingesetzt, wobei als Hauptprodukt wasserunlösliches Trithian, als Nebenprodukte sehr unangenehm riechende Alkylmercaptane entstehen [Review "H₂S-Scavenging" in Oil and Gas Journal, Jan. 1989, 51-55 (Part 1); 81-82 (Part 2); Feb. 1989, 45-48 (Part 3); 90-91 (Part 4)]. Trithian ist nicht stabil, sondern zerfällt leicht in die Edukte. Mit einem Scavenger auf Formaldehyd-Basis müssen daher aufgrund des Geruchs und der Giftigkeit, sowohl von Schwefelwasserstoff, als auch von Formaldehyd, spezielle Sicherheitsvorkehrungen getroffen werden.

Infolge der beschriebenen Nachteile von Formaldehyd werden heute zunehmend andere Aldehyde oder Aldehydgemische eingesetzt. Insbesondere hat Glyoxal als Schwefelwasserstoffänger Eingang in die Erdöl- und Erdgasindustrie gefunden. Das US-Patent 4 680 127 beschreibt ein Verfahren zur Reduzierung des Schwefelwasserstoffgehaltes in wäßrigen oder nassen gasförmigen Medien durch Zusatz von sehr geringen Mengen Glyoxal oder Glyoxal in Kombination mit anderen Aldehyden. Ein wesentlicher Nachteil dieses Verfahrens ist jedoch, daß die hierbei entstehenden Additionsprodukte aus Glyoxal und Schwefelwasserstoff wasserlöslich und nur im Alkalischen (pH = 9) stabil sind. Bei den in der Praxis vorherrschenden sauren pH-Bedingungen (pH = 4,5 - 5,5) sind diese Additionsprodukte nicht mehr stabil und zersetzen sich unter Freisetzung von Schwefelwasserstoff.

Ein Scavenger-System, insbesondere für toxische Stoffe, wie Schwefelwasserstoff, muß aber neben der technischen Durchführbarkeit stabile sowie im sauren und basischen Bereich wasserunlösliche Endprodukte liefern, die gefahrlos handhabbar und aus Gründen des Umweltschutzes deponier- oder verwertbar sein müssen.

Überraschenderweise wurde nun gefunden, daß beim Einleiten von Schwefelwasserstoff enthaltenden Gasen in eine wäßrige Glyoxallösung mit einem pH-Wert von 5-11 ein in Wasser und sogar in Säuren (pH 1) unlösliches stabiles Produkt entsteht, sofern die Glyoxallösung eine Konzentration von mindestens 15 Gew.-% aufweist.

Gegenstand der Erfindung ist somit ein Verfahren zum Abfangen von Schwefelwasserstoff aus Gasen, vor allem aus Roherdgas, Roherdölgas oder Synthesegasen, wobei man in eine wäßrige, mindestens 15 gew.-%ige Glyoxallösung, die zu Beginn der Gaseinleitung einen pH-Wert von 5 bis 11 aufweist, das Schwefelwasserstoff-haltige Gas einleitet. Das Einleiten erfolgt zweckmäßigerweise so lange bis das Molverhältnis von Glyoxal zum Schwefelwasserstoff 3 zu 2 beträgt. Das dabei als Niederschlag erhaltene feste Reaktionsprodukt, das den Schwefelwasserstoff gebunden enthält, läßt sich problemlos abtrennen und deponieren.

Das Reaktionsprodukt ist geruchsfrei, säure- und alkalienbeständig (bis pH 9) sowie thermostabil, kann problemlos abfiltriert und z.B. bei 60°C im Vakuum getrocknet werden. In 2 n Salzsäure tritt keine Zersetzung ein. Das Produkt ist darüberhinaus in den meisten üblichen organischen Lösungsmitteln, mit Ausnahme von Dimethylsulfoxid, Dimethylformamid und Dimethylacetamid unlöslich. Auch im alkalischen Bereich bis pH 9 ist das Produkt stabil und unlöslich, erst beim Behandeln mit 2n Natronlauge zersetzt sich das Produkt unter Freisetzung von Schwefelwasserstoff. Das ausgefällte Produkt hat somit eine ganz andere Struktur als die bisher mit verdünnten Glyoxallösungen erhaltenen Additionsprodukte aus Glyoxal und Schwefelwasserstoff und ist problemlos zu deponieren.

Als Scavengerlösung wird im allgemeinen eine handelsübliche 40%ige Glyoxallösung verwendet, die auf den angegebenen pH-Wert Bereich eingestellt wurde. Im allgemeinen sollte der Glyoxalgehalt 50 Gew-% in der Lösung nicht überschreiten, der bevorzugte Konzentrationsbereich liegt bei 25 bis 45 Gew.-%.

Der pH-Bereich der Glyoxallösung liegt zweckmäßigerweise bei 5 bis 11, vorzugsweise 5,5 bis 8, insbesondere 6 bis 7. Gewöhnlich beginnt die Gaseinleitung mit einer alkalischen Glyoxallösung (pH 8-10). Im Laufe des Verfahrens verschiebt sich der pH bis in den sauren Bereich (pH 5,5 bis 7,0). Die Reaktion wird bei üblichen Arbeitstemperaturen, d.h. gewöhnlich 10 bis 70°C, durchgeführt.

Ferner können der Scavengerlösung bei der Erdgasförderung übliche Additive, insbesondere Korrosionsschutzmittel, wie z.B. quartäre Ammoniumsalze, zugesetzt werden.

### Beispiel

**H₂S-Scavenging mit 40 %iger Glyoxallösung**

In einem 1 Liter Reaktionsgefäß mit Rührer, Gas-Einleitungsrohr und Temperaturfühler werden 200 g (1,38 mol) 40 %ige Glyoxallösung vorgelegt und mit 50 %iger Natronlauge auf pH 9 gestellt. In die vorgelegte Glyoxallösung wird bei einer Anfangstemperatur von 32°C aus einer Gasflasche H₂S-Gas bis zur Sättigung eingeleitet (7 Stunden), wobei der pH-Wert bis in den sauren Bereich absinkt. Die pro Mol H₂S freiwerdende Reaktionswärme beträgt dabei -55 kJ, eine Kühlung ist allerdings nicht erforderlich. Insgesamt werden 31 g (0,93 mol) H₂S aufgenommen. Das Glyoxal:H₂S Kondensationsprodukt (Molverhältnis 3:2) fällt aus der wäßrigen Lösung als weißer Feststoff aus. Nach Abfiltrieren und Trocknen im Vakuum bei 60°C erhält man 88 g eines amorphen alkali-, säure- und wasserunlöslichen Pulvers, welches problemlos deponiert werden kann.

## Patentansprüche

1. Verfahren zum Abfangen von Schwefelwasserstoff aus Gasen, wobei man in eine wäßrige, mindestens 15 gew.-%ige Glyoxallösung, die zu Beginn der Gaseinleitung einen pH-Wert von 5 bis 11 aufweist, das Schwefelwasserstoff-hältige Gas einleitet, wobei man ein festes den Schwefelwasserstoff gebunden enthaltendes Reaktionsprodukt als Niederschlag erhält.

2. Verfahren nach Anspruch 1, dadurch gekennzeichnet, daß die Konzentration der Glyoxallösung 15 bis 50 Gew.-% beträgt.

3. Verfahren nach Anspruch 1 oder 2, dadurch gekennzeichnet, daß solange das Schwefelwasserstoff-haltige Gas eingeleitet wird, bis das Molverhältnis von Glyoxal zum Schwefelwasserstoff 3 zu 2 beträgt.

4. Verfahren nach einem der Ansprüche 1 bis 3, dadurch gekennzeichnet, daß man das ausgefallene Reaktionsprodukt von der Glyoxallösung abtrennt.

5. Verfahren nach einem der Ansprüche 1 bis 4, dadurch gekennzeichnet, daß der wäßrigen Glyoxallösung bei der Erdgasförderung übliche Additive, insbesondere Korrosionsschutzmittel zugesetzt werden.

6. Verfahren nach einem der Ansprüche 1 bis 5, dadurch gekennzeichnet, daß die Glyoxallösung zu Beginn der Gaseinleitung einen pH-Wert von 5,5 bis 8 aufweist.

7. Verfahren nach einem der Ansprüche 1 bis 6, dadurch gekennzeichnet, daß die Glyoxallösung zu Beginn der Gaseinleitung einen pH-Wert von 6 bis 7 aufweist.

8. Verfahren nach einem der Ansprüche 1 bis 8, dadurch gekennzeichnet, daß die Konzentration der Glyoxallösung 25 bis 45 Gew.-% beträgt.

## Claims

1. Process for scavenging hydrogen sulphide from gases, in which the hydrogen sulphide-containing gas is introduced into an aqueous glyoxal solution of at least 15 % strength by weight which, at the start of the gas introduction has a pH of 5 to 11, a solid reaction product which contains the hydrogen sulphide in bound form being obtained as precipitate.

2. Process according to Claim 1, characterized in that the concentration of the glyoxal solution is 15 to 50 % by weight.

3. Process according to Claim 1, characterized in that the hydrogen sulphide-containing gas is introduced until the molar ratio of glyoxal to hydrogen sulphide is 3 to 2.

4. Process according to one of Claims 1 to 3, characterized in that the precipitated reaction product is separated off from the glyoxal solution.

5. Process according to one of Claims 1 to 4, characterized in that additives customary in natural gas extraction, in particular anticorrosion agents, are added to the aqueous glyoxal solution.

6. Process according to one of Claims 1 to 5, characterized in that at the start of the gas introduction the glyoxal solution has a pH of 5.5 to 8.

7. Process according to one of Claims 1 to 6, characterized in that at the start of the gas introduction the glyoxal solution has a pH of 6 to 7.

8. Process according to one of Claims 1 to 8, characterized in that the concentration of the glyoxal solution is 25 to 45 % by weight.

## Revendications

1. Procédé pour absorber de l'hydrogène sulfuré dans des gaz, dans lequel on fait passer le gaz contenant de l'hydrogène sulfuré dans une solution aqueuse de glyoxal à au moins 15 % en poids, qui présente au début du passage du gaz une valeur de pH de 5 à 11, et on obtient ainsi sous forme de précipité un produit réactionnel solide contenant l'hydrogène sulfuré lié.

2. Procédé suivant la revendication 1, caractérisé en ce que la concentration de la solution de glyoxal est de 15 à 50 % en poids.

3. Procédé suivant la revendication 1 ou 2, caractérisé en ce qu'on fait passer le gaz contenant de l'hydrogène sulfuré jusqu'à ce que le rapport molaire du glyoxal à l'hydrogène sulfuré soit égal à 3:2.

4. Procédé suivant l'une des revendications 1 à 3, caractérisé en ce qu'on sépare le produit réactionnel précipité de la solution de glyoxal.

5. Procédé suivant l'une des revendications 1 à 4, caractérisé en ce que des additifs classiques, notamment des agents de protection contre la corrosion, sont ajoutés à la solution aqueuse de glyoxal lors de la production de gaz naturel.

6. Procédé suivant l'une des revendications 1 à 5, caractérisé en ce que la solution de glyoxal présente au début du passage du gaz une valeur de pH de 5,5 à 8.

7. Procédé suivant l'une des revendications 1 à 6, caractérisé en ce que la solution de glyoxal présente au début du passage du gaz une valeur de pH de 6 à 7.

8. Procédé suivant l'une des revendications 1 à 8, caractérisé en ce que la concentration de la solution de glyoxal est de 25 à 45 % en poids.
